Europäisches Patentamt

European Patent Office

Office européen des brevets

(19)

(11) Numéro de publication: **0 284 525**
**A1**

(12)

# DEMANDE DE BREVET EUROPEEN

(21) Numéro de dépôt: 88420085.8

(22) Date de dépôt: 08.03.88

(51) Int. Cl.⁴: **A 23 J 1/20**

(30) Priorité: 10.03.87 FR 8703517

(43) Date de publication de la demande:
**28.09.88 Bulletin 88/39**

(84) Etats contractants désignés:
**BE CH DE ES GB IT LI NL**

(71) Demandeur: **ENTREMONT S.A. Société dite:**
**25 Faubourg des Balmettes**
**F-74000 Annecy (FR)**

**SOCIETE NATIONALE ELF AQUITAINE Société anonyme dite**
**Tour Elf 2, Place de la Coupole La Défense 6**
**F-92400 Courbevoie (FR)**

(72) Inventeur: **Frankinet, Jacques**
**20 allée des Fauvettes**
**F-56000 Vannes (FR)**

**Peyrouset, André**
**Ger**
**F-64530 Pontacq (FR)**

**de Carheil, Marc**
**2 rue de Kerquer**
**F-56000 Vannes (FR)**

**Spring, François**
**5 rue de la Bidassor**
**F-64000 Pau (FR)**

(74) Mandataire: **Laurent, Michel et al**
**Cabinet LAURENT et GUERRE 20, rue Louis Chirpaz B.P. 32**
**F-69131 Ecully Cédex (FR)**

(54) **Procédé pour extraire des protéines du lactosérum, par adsorption et élution.**

(57) Procédé pour extraire des protéines du lactosérum (2), par adsorption (5) sur un support solide (6), et ensuite élution des protéines adsorbées au moyen d'une solution acide (12), caractérisé en ce que l'adsorption est effectuée avec un milieu (4) dont le pH est proche de celui du lactosérum (2) à traiter.

Application : extraction sélective de la lactoferrine, de la lactoperoxydase et des immunoglobulines.

EP 0 284 525 A1

Bundesdruckerei Berlin

**Description**

PROCEDE POUR EXTRAIRE DES PROTEINES DU LACTOSERUM, PAR ADSORPTION ET ELUTION.

L'invention concerne un procédé pour extraire certaines protéines du lactosérum, notamment celles qui fixent le fer, telles que la lactoferrine, la transferrine, la lactoperoxydase ainsi que les immunoglobulines.

Ces protéines sont de plus en plus recherchées non seulement pour leur intérêt nutritionnel, notamment comme apporteur biologique de fer chez les nourrissons (pour la lactoferrine), mais surtout pour leurs propriétés pharmacologiques, notamment comme agents anti-bactériens.

On connait déjà plusieurs procédés d'extraction.

Dans le brevet FR-A-2 399 214, on a suggéré d'extraire ces protéines en milieu acide par mise en contact du lactosérum avec une résine échangeuse d'anions, puis mise en contact avec de la silice et enfin élution en pH acide ou basique selon le cas. Cette solution, dans laquelle le passage sur la résine est indispensable, permet effectivement de séparer les protéines, mais en bloc, que celles-ci soient recherchées ou non. Ce procédé ne permet donc pas de récupérer sélectivement des protéines déterminées.

Dans le brevet FR-A-2 505 615, on a proposé de récupérer sélectivement les protéines recherchées en adsorbant tout d'abord le lactosérum sur un support solide tel que notamment de la silice en milieu faiblement basique (7,9 à 8,5),puis en éluant les protéines adsorbées au moyen d'une solution acide.Ce procédé qui donne d'excellents résultats pour ce qui concerne l'extraction sélective,ne s'est guère développé car le lactosérum traité prend un caractère basique qui le rend impropre à la consommation animale, sauf traitement ultérieur onéreux.

L'invention pallie ces inconvénients. Elle vise un procédé d'extraction de certaines protéines du lactosérum, dont celles fixant le fer, par adsorption sur un support solide et ensuite élution des protéines adsorbées, qui soit sélectif, économique et facile à mettre en oeuvre, et surtout permette de récupérer le lactosérum traité sans le modifier,c'est-à-dire qui le laisse utilisable, notamment dans l'alimentation animale, ce que l'on ne savait pas faire jusqu'alors.

Ce procédé pour extraire des protéines du lactosérum, par adsorption sur un support solide et ensuite élution des protéines adsorbées au moyen d'une solution acide, se caractérise :

- tout d'abord, en ce que l'adsorption est effectuée avec un milieu acide dont le pH est proche de celui du lactosérum à traiter ;

- ensuite, en ce que l'on ellue les protéines ainsi adsorbées de manière connue au moyen d'une solution acide ;

- et enfin, en ce que on ajoute à la solution acide ayant servi à l'élution de la colonne d'adsorption une solution aqueuse d'halogénure alcalino-terreux à pH légèrement basique pour précipiter les protéines indésirables et récupérer les protéines recherchées dans le liquide surnageant.

Le procédé de l'invention consiste,d'une part, à remplacer le traitement d'adsorption basique revendiqué dans l'état de la technique par un traitement en milieu faiblement acide, à savoir dans des conditions de pH voisines de celles du lactosérum à traiter, et d'autre part,à soumettre la solution provenant de l'élution à un traitement supplémentaire par addition d'un halogénure alcalino-terreux, notamment de chlorure de calcium permettant une séparation par précipitation . Or cette nouvelle voie présente un avantage économique considérable et déterminant, car le lactosérum traité de la sorte ne se trouve pratiquement pas modifié ou altéré, mais simplement appauvri des protéines recherchées, dont la concentration est seulement de l'ordre de quelques dizaines de milligrammes par litre. De la sorte, ce lactosérum reste intégralement utilisable tel que pour ses applications usuelles, notamment en alimentation animale. Ainsi, cette voie nouvelle permet de passer de l'insuccès économique au succès, ce qui prouve bien qu'elle n'était pas évidente.

Le procédé est applicable aux lactosérums de diverses origines :

- lorsque le lactosérum est un lactosérum doux de fromagerie et l'adsorption est effectuée à un pH voisin de 6,4 pH de ce lactosérum ; si le lactosérum est issu d'une caseïnerie, le traitement d'adsorption est alors effectué à un pH voisin de 4,5, puisque le pH de ce lactosérum est voisin de cette valeur ;

- l'adsorption en milieu faiblement acide est effectuée :

. tout d'abord, par passage du lactosérum refroidi sur un support de silice poreuse pulvérulente dont :

+ la granulométrie est comprise entre 10 et 1000μm,de préférence voisine de 500μm,

+ dont la surface spécifique est comprise entre 1 et 300 m2/g, de préférence comprise entre 15 et 150 m2/g,

+ le diamètre moyen des pores est compris entre 5 et 150 nm,

. puis, par passage sur cette colonne adsorbée d'une solution aqueuse de lavage à un pH voisin de 6,4.

En effet, on a observé que :

. si la surface spécifique des grains de silice est supérieure à 300 m2/g, les pores devenaient trop petits et la surface accessible devenait trop faible pour que les protéines puissent être adsorbées ;

. si cette surface spécifique était inférieure à 1 m2/g, le rendement devenait trop faible, ce qui nécessite alors d'utiliser une grande quantité de silice, ce qui bien évidemment, va à l'encontre du rendement économique. De plus, si le diamètre des pores est supérieur à 250 nm, les grains deviennent alors trop alvéolaires et par là, très fragiles.

Sur un plan pratique, la solution aqueuse de lavage très légèrement acide, de pH voisin de 6,4 est à base de chlorure de sodium et est chauffée à 40-45°C.

Dans une deuxième phase, les produits adsorbés sur la colonne sont ensuite élués à température ambiante par passage d'une solution légèrement acide aqueuse à pH généralement compris entre 1 et 4 à base de NaCl et d'un acide choisi dans le groupe comprenant l'acide chlorhydrique, l'acide phosphorique et l'acide acétique.

Ensuite dans une troisième phase, on ajoute à la solution acide ayant servi à l'élution de la colonne d'adsorption, une solution aqueuse d'un halogénure alcalino-terreux, de préférence de chlorure de calcium, à pH légèrement basique, ce qui provoque une précipitation spontanée des protéines indésirables, ainsi que des lipides, et permet de récupérer dans le liquide surnageant les protéines recherchées, telles que la lactoferrine, la lactoperoxydase ou les immunoglobulines.

Le liquide surnageant contenant les protéines recherchées est alors clarifié, puis concentré par ultra-filtration et dialyse simultanée, et le retentat obtenu contenant les protéines recherchées peut être soumis à une chromatographie classique d'échange d'ions pour séparer la lactoferrine de la lactoperoxydase et des immunoglobulines, puis à une opération de lyophilisation ou de séchage.

Avant la dialyse, on incorpore le cas échéant à la solution concentrée un sel de fer.

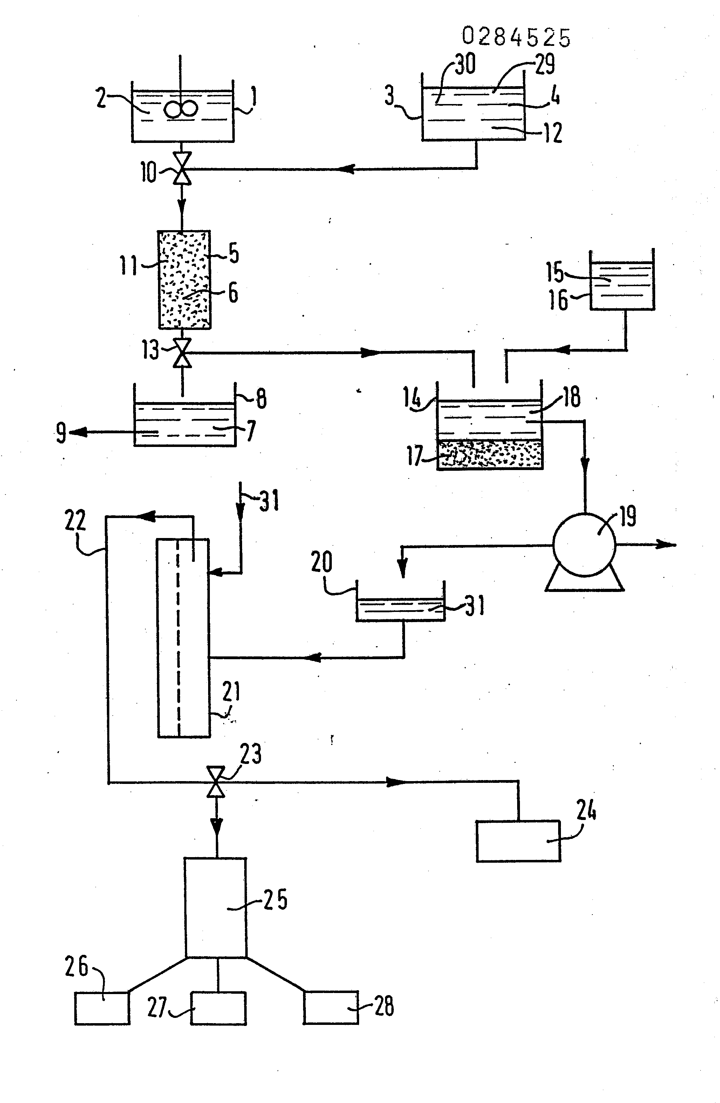

La manière dont l'invention peut être réalisée et les avantages qui en découlent ressortiront mieux des exemples de réalisation qui suivebt donnés à titre indicatif et non limitatif à l'appui de la figure unique annexée qui est une représentation schématique d'une installation conforme pour la mise en oeuvre du procédé selon l'invention.

Exemple 1 :

Dans un réservoir (1), on introduit 425 litres de lactosérum (2) doux de laiterie (pH 6,4) que l'on agite lentement pour le maintenir homogène. De manière connue, on refroidit ce lactosérum à une température comprise entre 3 et 8°C. Ce lactosérum (2) contient environ 98 mg de lactoferrine et 41,5 mg de lactoperoxydase par litre.

Dans le réservoir (3), on introduit 40 litres d'une première solution (4) chauffée à 40-45°C, contenant environ 6 g/l de chlorure de sodium (pH 6,4).

Dans la colonne (5), on place 5,8 kilos de silice pulvérulente (6) commercialisée par RHONE POULENC sous la marque déposée "SPHEROSIL-XOB 015" ayant une granulométrie comprise entre 100 et 200µm, un diamètre de pore voisin de 100 nm et une surface spécifique d'environ 25 m2/g. Pour éviter les écoulements préférentiels, la silice (6) est tassée dans la colonne (5).

Dans un premier temps, on laisse tout d'abord s'écouler le lactosérum (2) à une température de 8°C en dix heures vingt minutes du réservoir (1) sur la silice (6).

Le lactosérum traité (7) est récupéré dans un réservoir (8), puis est envoyé en (9) pour être concentré et séché de manière usuelle, afin de pouvoir être utilisé dans l'alimentation animale.

Lorsque tout le lactosérum (2) a traversé la colonne (6), on bascule la vanne (10) pour envoyer sur la colonne adsorbée désignée par la référence (11) les quarante litres de la première solution (4) de lavage à pH 6,4.

La silice (6) adsorbe donc les protéines recherchées du lactosérum (2) dans des conditions de pH voisines de celles de ce lactosérum (2) qui est de 6,4.

Une fois que la solution de lavage (4) est passée, on introduit dans le réservoir (3) une seconde solution acide (12) à pH compris entre 1 et 4 , avantageusement 2,2 formée de 30 litres à 20°C , contenant :

- de 10 à 120 g par litre de chlorure de sodium, de préférence 15 g par litre ;

- de 0,5 à 3 g par litre, de préférence 1 à 1,5 g par litre d'acide phosphorique ($H_3PO_4$),voire d'acide chlorydrique ou d'acide acétique, de manière à ce que le pH soit bien compris entre 1 et 4.

On laisse les 30 litres de cette seconde solution (12) s'écouler librement sur la colonne (11) adsorbée. Par la vanne (13), on récupère le liquide de lavage dans le bac (14). On lave ensuite la colonne (6,11) au moyen de 20 litres d'eau à température ambiante que l'on récupère également dans le bac (14).

Dans les 50 litres récupérés en (14), on détecte environ 13,5 g de lactoferrine et 1,5 g de lactoperoxydase. Dans les 50 litres contenus dans le réservoir (14), on envoie 0,2 litre d'une solution aqueuse (15) à 550g/l de chlorure de calcium contenue dans le réservoir (16). On ajuste le pH de la solution contenue dans le réservoir (14) entre 7 et 8 en ajoutant de la chaux ou de la soude. De préférence, ce pH est très légèrement basique et est compris entre 7,2 et 7,4. On observe alors une précipitation spontanée dans le bac (14). On récupère le précipitat (17) au fond du bac (14) et on le sèche.Ce précipitat contient alors environ 80 % de protéines.

Les protéines recherchées, à savoir la lactoferrine, la lactoperoxydase, les immunoglobulines, restent dans le liquide surnageant (18). Ce liquide surnageant (18) est envoyé dans un clarificateur (19) pour enlever les dernières traces de précipité.

Le produit clarifié est envoyé dans un bac (20), puis de là dans un appareil d'ultra-filtration (21) où l'on injecte de l'eau de dialyse (31) pour diminuer la teneur en minéraux.

Le retentat (22) est récupéré en tête de la colonne (21) pour être grâce à la vanne (23) soit lyophilisé en bloc (24) soit, après fractionnement en chromatographie (25), séparé en chacune des protéines recherchées, à savoir lactoferreine (26), lactoperoxydase (27), immunoglobulines (28), soit séché par tout procédé approprié.

On procède ensuite en (29) à un lavage. La silice (6) est ensuite régénérée en (30) par une percolation de vingt litres d'une solution d'acétate de sodium à pH 5,5

Ainsi, pour 425 litres de lactosérum (2), on obtient :

- d'une part, pratiquement 425 litres de lactosérum extrait (9) aptes à être utilisés dans l'alimentation animale ;

- d'autre part :

. 13,5 grammes de lactoferrine,
. 1,5 grammes de peroxydase,
. 25,0 grammes de immunoglobines purifiées.

Il va de soi que lorsque le traitement est terminé, la silice (6) est régénérée comme décrit ci-dessus.

Exemple 2 :

Dans une variante, on injecte en (31) une solution de sels de fer. Cela permet de saturer les protéines recherchées en fer, donc d'augmenter leur efficacité nutritionnelle.

Exemple 3 :

On répète l'exemple 1 avec la même installation mais à partir d'une solution de 100 litres de lactosérum acide de caséïnerie de pH 4,5.

Ce lactosérum contient 52 mg/l de lactoferrine et 23 mg/l de lactorperoxydase.

On lave à pH 4,5 et on élue dans les mêmes conditions qu'à l'exemple 1.

On récupère un volume total d'éluat de 13 litres contenant :

. 3,7 g de lactoferrine,
. 0,4 g de lactoperoxydase,
. et 2,6 g d'immunoglobuline purifiée.

Ainsi, comme déjà dit, le procédé selon l'invention permet de récupérer en (24,26,27,28) des protéines recherchées purifiées à haute valeur ajoutée et d'autre part, n'affecte pas les qualités essentielles du lactosérum traité intégralement récupéré en (9) qui reste totalement apte à la consommation animale.

Le procédé selon l'invention se caractérise essentiellement par deux étapes originales :

- tout d'abord et surtout, par l'étape d'adsorption sur un support solide, à savoir de la silice, qui est effectuée non plus en pH basique, mais à un pH légèrement acide voisin de celui du lactosérum à traiter, ce qui permet de récupérer intégralement ce lactosérum pour l'utiliser alors directement en alimentation animale, ce qui se traduit par une économie substantielle et déterminante ;

- ensuite, par l'étape de précipitation par le sel de calcium en pH légèrement basique, ce qui facilite la séparation des produits valorisables qui surnagent, alors que les produits peu recherchés ont intégralement précipité.

Par ailleurs, le procédé de l'invention présente les avantages suivants :

- la possibilité de rajouter en fin de cycle un sel de fer pour augmenter l'activité nutritionnelle de la lactoferrine ;

- le traitement qui s'effectue à température ambiante, n'affecte pas sensiblement les propriétés de la lactoferrine.

Les protéines récupérées de la sorte, à savoir notamment celles qui fixent le fer, telles que la lactoferrine ainsi que la lactoperoxydase et les immunoglobulines, peuvent être utilisées avec succès dans les applications connues à ce jour, telles que par exemple :

- en nutrition animale pour la protection du tube digestif et le rôle de facteur de croissance ;

- dans le domaine vétérinaire pour l'activité anti-infectieuse intestinale et au niveau mammaire ;

- dans le domaine diététique et de la nutrition humaine, notamment comme vecteur de fer ;

- dans le domaine pharmaceutique : ophtalmologie, gastro-entérologie, paradontologie, dermatologie, gynécologie...

**Revendications**

1/ Procédé pour extraire des protéines du lactosérum (2), par adsorption (5) sur un support solide (6), et ensuite élution des protéines adsorbées au moyen d'une solution acide (12), caractérisé :

- tout d'abord, en ce que l'adsorption est effectuée avec un milieu (4) dont le pH est proche de celui du lactosérum (2) à traiter ;

- ensuite, en ce que l'on élue les protéines fixées sur le support (6) de manière connue au moyen d'une solution acide (12) ;

- et enfin, en ce que l'on ajoute à la solution acide issue de l'élution du support solide d'adsorption (5,6) une solution aqueuse (15) d'halogénure alcalinoterreux à pH légèrement basique pour précipiter les protéines indésirables (17) et récupérer les protéines recherchées (lactoferrine, lactoperoxydase et immunoglobulines..) dans le liquide surnageant (18).

2/ Procédé d'extraction selon la revendication 1, caractérisé en ce que le lactosérum (2) est un lactosérum de fromagerie et en ce que l'adsorption est effectuée à un pH voisin de 6,4.

3/ Procédé d'extraction selon la revendication 2, caractérisé en ce que l'adsorption avec le milieu de pH proche de celui du lactosérum est effectué tout d'abord par passage de la solution de lactosérum (2) refroidi sur un support de silice poreuse (6) pulvérulente dont :

. la granulométrie est comprise entre 10 et 1000μm,

. la surface spécifique est comprise entre 1 et 300 m2/g,

. le diamètre des pores est compris entre 5 et 150 nm,

puis par passage sur cette colonne adsorbée (11) d'une solution aqueuse de lavage (2,4) à pH voisin de 6,4.

4/ Procédé selon l'une des revendications 1 à 3, caractérisé en ce que la solution de lavage (4) de la phase d'adsorption est à base de chlorure de sodium et est chauffée à 40-45°C.

5/ Procédé d'extraction selon l'une des revendications 1 à 4, caractérisé en ce que la colonne adsorbée (11) est ensuite éluée (12) à température ambiante par passage d'une solution acide aqueuse à base de chlorure de sodium et d'un acide choisi dans le groupe comprenant l'acide chlorydrique, l'acide phosphorique et l'acide acétique.

6/ Procédé d'extraction selon la revendication 1, caractérisé en ce que le liquide surnageant (18) contenant les protéines recherchées, est clarifié (19), puis concentré (21) par ultra-filtration et dialyse (21) simultanée, et en ce que le retentat obtenu (22) contenant les protéines recherchées est lyophilisé (24,26,27,28) après chromatographie (25).

7/ Procédé d'extraction selon la revendication 6, caractérisé en ce que on incorpore avant la dialyse un sel de fer.

0284525

Office européen des brevets

**RAPPORT DE RECHERCHE EUROPEENNE**

Numero de la demande

EP  88 42 0085

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | FR-A-2 399 214  (RHONE-POULENC)<br>* Revendications 1,2,8,10 *<br>--- | 1 | A 23 J    1/20 |
| A | GB-A-2 098 998  (SOECIETE NATIONALE ELF AQUITAINE)<br>* Revendications 1-13; colonne 2, lignes 22-30 * & FR-A-2 505 615 (Cat. D)<br>--- | 1,3 | |
| A | NETHERLANDS MILK AND DAIRY JOURNAL, vol. 40, no. 1, 1986, pags 41-56, Meppel, NL; J.N. DE WIT et al.: "Evaluation of functional properties of whey protein concentrates and whey protein isolates. 2. Effects of processing history and composition"<br>* Page 43; page 44, alinéa 1 *<br>--- | 1 | |
| A | FR-A-2 088 367  (W. DUMONT et al.)<br>* Revendications 1-3,8 *<br>----- | 1 | |

**DOMAINES TECHNIQUES RECHERCHES (Int. Cl.4)**

A 23 J

Le présent rapport a été établi pour toutes les revendications

| Lieu de la recherche | Date d'achèvement de la recherche | Examinateur |
|---|---|---|
| LA HAYE | 20-06-1988 | PEETERS J.C. |

EPO FORM 1503 03.82 (P0402)